Europäisches Patentamt

European Patent Office

Office européen des brevets

(11) Veröffentlichungsnummer: **0 268 593**
**B1**

(12) **EUROPÄISCHE PATENTSCHRIFT**

(45) Veröffentlichungstag der Patentschrift: **06.06.90**

(21) Anmeldenummer: **87900653.4**

(22) Anmeldetag: **15.01.87**

(86) Internationale Anmeldenummer:
**PCT/DE87/00018**

(87) Internationale Veröffentlichungsnummer:
**WO 87/06200 22.10.87 Gazette 87/23**

(51) Int. Cl.⁵: **B 60 K 31/00,** B 60 R 16/02,
G 05 D 13/04, F 02 D 41/02

(54) **FAHRGESCHWINDIGKEITS-EINSTELLVORRICHTUNG.**

(30) Priorität: **19.04.86 DE 3613322**

(43) Veröffentlichungstag der Anmeldung:
**01.06.88 Patentblatt 88/22**

(45) Bekanntmachung des Hinweises auf die
Patenterteilung:
**06.06.90 Patentblatt 90/23**

(84) Benannte Vertragsstaaten:
**DE FR SE**

(56) Entgegenhaltungen:
**FR-A-2 431 935**

(73) Patentinhaber: **ROBERT BOSCH GMBH**
**Postfach 50**
**D-7000 Stuttgart 1 (DE)**

(72) Erfinder: **BÜRK, Peter**
**Uhllenburgstr. 34**
**D-7592 Reuchen-Ulm (DE)**
Erfinder: **HAHN, Klaus**
**Haabergstr. 101**
**D-7582 Bühlertal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Die Erfindung geht aus von einer Fahrgeschwindigkeits-Einstellvorrichtung nach der Gattung des Hauptanspruchs wie sie beispielsweise aus der FR-A-2431 935. Diese Einstellvorrichtung dient in Verbindung mit einer Fahrgeschwindigkeits-Regelanlage zur Eingabe des Sollwertes der Fahrgeschwindigkeit. Sie weist wenigstens zwei Schaltkontakte auf, wobei beim Schließen eines Kontaktes die Fahrgeschwindigkeit erhöht und beim Schließen des anderen Kontaktes die Fahrgeschwindigkeit abgesenkt wird. Die Einstellvorrichtung kann weitere Schaltkontakte aufweisen, die beispielsweise zum Ein- bzw. Ausschalten der Fahrgeschwindigkeit-Regelanlage oder zum Abruf einer zuvor gespeicherten Sollgeschwindigkeit verwendet werden können. Da Fahrgeschwindigkeits-Regelanlagen unterhalb einer Mindestgeschwindigkeit, die beispielsweise bei 40 km/h liegt, aus Sicherheitsgründen selbsttätig außer Betrieb gesetzt werden, sind die Schaltkontakte der Fahrgeschwindigkeits-Einstellvorrichtung unterhalb der Mindestgeschwindigkeit frei verfügbar und zur Bedienung anderer Funktionen verwendbar.

Vorteile der Erfindung

Die erfindungsgemäße Verwendung der Fahrgeschwindigkeits-Einstellvorrichtung unterhalb der Mindestgeschwindigkeit als Bedienelement für andere Funktionen weist den Vorteil auf, daß Eingabeelemente wie Schalter oder Potentiometer eingespart werden. Eine Anwendung im Fahrzeug mit einem Verbrennungsmotor besteht in der Sollwertvorgabe der Leerlaufdrehzahl des Motors. Insbesondere bei Nutzfahrzeugen besteht der Wunsch, neben der selbsttätigen Leerlaufregelung auch dem Fahrer eine Verstellmöglichkeit der Leerlaufdrehzahl zu ermöglichen. Er kann somit beispielsweise das Einsetzen der Heizungswirkung nach dem Start beschleunigen oder bei Ausfall der vorhandenen mechanischen Leerlaufregelungsanlage einen Notlaufbetrieb steuern. Weiterhin ist eine Verwendung der Schaltkontakte der Fahrgeschwindigkeits-Einstellvorrichtung zur elektrischen Verstellung der Rückspiegel oder des Fahrersitzes möglich, da diese Einstellungen-vorzugsweise im Stillstand des Fahrzeugs vorgenommen werden. Eine weitere Anwendungsmöglichkeit stellt die Vorgabe einer Drehzahlbegrenzung des Antriebsmotors sowie einer Höchstgeschwindigkeit dar.

Zur Vermeidung von Fehlbedienungen ist das Vorsehen eines Totbereiches, in dem die Fahrgeschwindigkeits-Einstellvorrichtung funktionslos ist, besonders vorteilhaft. Unterhalb einer ersten Schwelle der Fahrgeschwindigkeit, welche der Mindestgeschwindigkeit im Regelbetrieb entspricht und oberhalb einer zweiten Schwelle der Fahrgeschwindigkeit werden die Kontakte des Einstellhebels von den weiteren elektrischen Einrichtungen getrennt. Die beiden Schwellwerte sind fest eingestellt und liegen beispielsweise bei 40 km/h und 20 km/h. Oberhalb der ersten Schwelle wirkt die Fahrgeschwindigkeits-Einstellvorrichtung bestimmungsgemäß ausschließlich auf die Fahrgeschwindigkeits-Regelanlage. Unterhalb der zweiten Schwelle werden mit den Schaltkontakten analog oder digital arbeitende Schaltungsanordnungen gesteuert. Im einfachsten Falle wird die Ein-Aus-Funktion der Schaltkontakte unmittelbar zum Ein- bzw. Ausschalten elektrischer Anlagen wie beispielsweise Elektromotoren verwendet.

Zur Änderung eines analogen Sollwertes mittels elektrischer Schaltkontakte eignet sich ein steuerbarer Rampengenerator. In Neutralstellung der Fahrgeschwindigkeits-Einstellvorrichtung verharrt das Ausgangssignal des Rampengenerators auf einem gleichbleibenden Wert, bei Betätigung des einen oder des anderen Schaltkontaktes fällt das Ausgangssignal solange ab bzw. es steigt solange an, bis die Einstellvorrichtung wieder in Neutralstellung gebracht wird. Das Über- bzw. Unterschreiten von zulässigen Sollwerten durch zu langes Betätigen der Einstellvorrichtung verhindert eine Begrenzerschaltung. Der eingestellte Sollwert ist beispielsweise als Steuersignal oder als Führungsgröße einer Regelschaltung verwendbar.

Mit den Schaltkontakten der Einstellvorrichtung lassen sich auf vorteilhafte Weise Digitalschaltungen ansteuern. Zur digitalen Sollwertvorgabe ist ein Aufwärts-Abwärtszähler einsetzbar, der entsprechend angesteuert wird. Ebenso wie bei der analogen Schaltung ist auch bei der digitalen Schaltung eine Begrenzung der einstellbaren Werte zweckmäßig. Der digitale Sollwert kann unmittelbar weiterverwendet werden, beispielsweise als Führungsgröße eines digitalen Reglers, es ist jedoch auch eine Umsetzung in einen Analogwert mittels eines Digital-Analog-Wandlers möglich.

In Abhängigkeit von der Anwendung kann es zweckmäßig sein, den analogen bzw. den digitalen Sollwert nach Abschalten des Fahrzeugs zu speichern, so daß er nach Wiedereinschalten zur Verfügung steht.

Weitere Einzelheiten der erfindungsgemäßen Verwendung der Fahrgeschwindigkeits-Einstellvorrichtung ergeben sich aus der folgenden Beschreibung.

Zeichnung

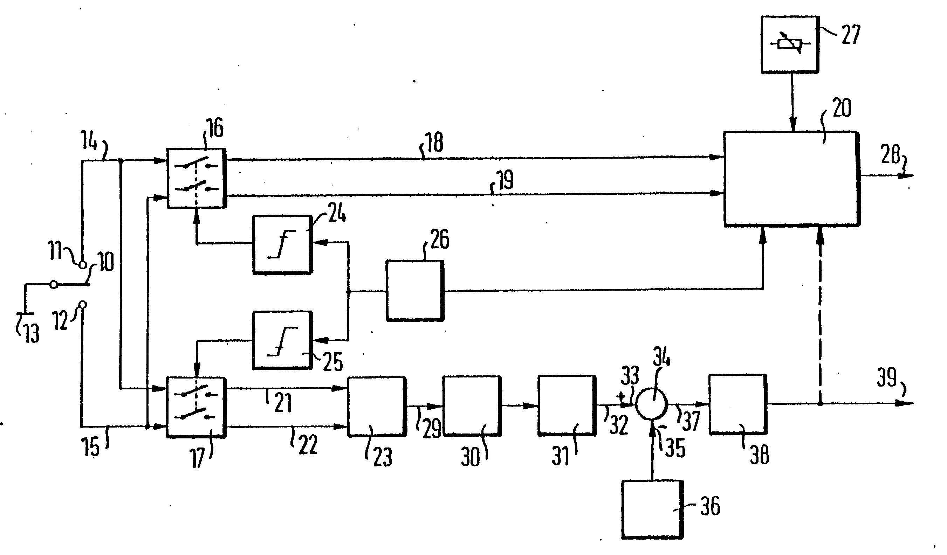

Die Figur zeigt ein Ausführungsbeispiel der erfindungsgemäßen Verwendung einer Fahrgeschwindigkeits-Einstellvorrichtung zur Einstellung eines Sollwertes unterhalb einer Mindestgeschwindigkeit mit einer Signalverarbeitungsanordnung.

Beschreibung der Ausführungsbeispiele

Die Figur zeigt eine Fahrgeschwindigkeits-Einstellvorrichtung 10 mit einem ersten und zweiten Schaltkontakt 11, 12, die ausgehend von der in der Figur gezeigten Neutralstellung gegen Masse 13 schaltbar sind. Die Einstellvorrichtung besteht beispielsweise aus einem Hebel, der in Lenkradnähe angebracht ist oder aus einer Drucktasteranordnung, die im Armaturenbrett eingebaut ist. Die beiden an den Schaltkontakten 11, 12 liegenden Signalleitungen 14, 15 liegen gleichzeitig sowohl an einer ersten Schaltergruppe 16 als auch an einer zweiten Schaltergruppe 17. Die beiden von der ersten Schaltergruppe 16 wegführenden Leitungen 18, 19 führen zu einem Fahrgeschwindigkeits-Regelgerät 20. Die beiden von der zweiten Schaltergruppe 17 wegführenden Signalleitungen 21, 22 führen zu einem Rampengenerator 23. Anstelle des Rampengenerators ist auch ein Aufwärts-Abwärts-Zähler verwendbar, wenn digitale Signalverarbeitung vorliegen soll.

Die erste Schaltergruppe 16 wird von dem Ausgang eines ersten Vergleichers 24 und die zweite Schaltergruppe 17 von dem Ausgang eines zweiten Vergleichers 25 angesteuert. Die beiden Vergleicher 24, 25 sind auf feste Werte der Fahrgeschwindigkeit eingestellt und erhalten ihr Eingangssignal von einem Fahrgeschwindigkeitsgeber 26, welcher auch mit dem Fahrgeschwindigkeits-Regelgerät 20 verbunden ist. Ein weiteres Signal erhält das Fahrgeschwindigkeits-Regelgerät 20 von dem Fahrpedalgeber 27. Die Ausgangsleitung 28 des Reglers 20 führt zu einem Stellglied, auf welches hier nicht weiter eingegangen wird.

Der Ausgang 29 des Rampengenerators 23 bzw. des Zählers führt über einen Begrenzer 30 in eine speichernde Anordnung 31, an deren Ausgang 32 eine Führungsgröße zur Verfügung steht, die auf den einen Eingang 33 eines Summierers 34 führt. Der andere Eingang 35 des Summierers 34 erhält eine Regelgröße von einem Regelgrößengeber 36.

Die Regelabweichung am Ausgang 37 des Summierers 34 gelangt in einen Regler 38, an dessen Ausgang 39 eine Stellgröße zur Verfügung steht. Gegebenenfalls ist der Ausgang 39 des Reglers 38 mit dem Fahrgeschwindigkeits-Regelgerät 20 verbunden.

Die Anordnung gemäß der Figur funktioniert folgendermaßen: Der Fahrgeschwindigkeits-Einstellhebel 10 legt, ausgehend von der gezeigten Neutralstellung, entweder den ersten Kontakt 11 oder den zweiten Kontakt 12 an Masse 13. Die zu den beiden Kontakten 11, 12 führenden Signalleitungen 14, 15 liegen gleichzeitig sowohl an der ersten als auch an der zweiten Schaltgruppe 16, 17. Die erste Schaltergruppe 16 verbindet gleichzeitig die Signalleitung 14 mit der Signalleitung 18 und die Signalleitung 15 mit der Signalleitung 19 oder unterbricht gleichzeitig beide Verbindungen.

Die erste Schaltergruppe 16 wird von dem ersten Vergleicher 24 angesteuert. Er ist auf einen festen Fahrgeschwindigkeitswert eingestellt, unterhalb dem die beiden Schalter der ersten Schaltergruppe 16 geöffnet und oberhalb dem die Schalter geschlossen sind. Diese Schwelle liegt beispielsweise bei 40 km/h. Liegt die Fahrgeschwindigkeit über dieser Schwelle, dann wird mit dem Fahrgeschwindigkeits-Einstellhebel 10 das Fahrgeschwindigkeits-Regelgerät 20 bestimmungsgemäß angesteuert.

Eine Verbindung des ersten Schaltkontaktes 11 mit der Masse 13 führt beispielsweise zu einer Erhöhung der Fahrgeschwindigkeit und eine Verbindung des zweiten Schaltkontaktes 12 mit der Masse 13 zu einer Absenkung der Fahrgeschwindigkeit. Das Fahrgeschwindigkeits-Regelgerät 20 erhält zur Durchführung dieser Aufgabe den aktuellen Wert der Fahrgeschwindigkeit von dem Fahrgeschwindigkeitgeber 26. Dieses Signal wird ebenfalls dem ersten Vergleicher 24 zugeführt.

Das Fahrgeschwindigkeits-Regelgerät 20 erhält wenigstens noch ein weiteres Eingangssignal, welches von dem Fahrpedalgeber 27 abgegeben wird. Unterhalb des ersten Schwellwertes der Fahrgeschwindigkeit, wenn die beiden Schalter der ersten Schaltergruppe geöffnet sind, hat der Fahrpedalgeber 27 allein Wirkung auf das Fahrgeschwindigkeits-Regelgerät 20. Oberhalb dieser ersten Schwelle hat der Fahrpedalgeber 27 nur dann einen Einfluß auf das Regelgerät 20, wenn sich der Einstellhebel 10 in der gezeigten Neutralstellung befindet.

Die zweite Schaltergruppe 17 wird von einem zweiten Vergleicher 25 angesteuert. Unterhalb einer zweiten Schwelle der Fahrgeschwindigkeit, die beispielsweise bei 20 Km/h liegt, sind die beiden Schalter der zweiten Schaltergruppe 17 geschlossen, so daß die beiden Signalleitungen 14, 21 und 15, 22 jeweils miteinander verbunden sind.

Die beiden Leitungen 21, 22 sind Steuerleitungen des Rampengenerators 23. Er liefert an seinem Ausgang 29 ein ansteigendes Signal, wenn der Einstellhebel 10 beispielsweise den ersten Schaltkontakt 11 an Masse 13 legt und ein abfallendes Signal, wenn er den zweiten Schaltkontakt 12 an Masse legt. Befindet sich der Einstellhebel 10 in der gezeigten Neutralstellung, dann ändert sich das Ausgangssignal 29 nicht. Es ändert sich ebenfalls nicht, wenn die durch den zweiten Vergleicher 25 vorgegebene zweite Schwelle der Fahrgeschwindigkeit überschritten wird und infolgedessen die beiden Schalter der zweiten Schaltergruppe 17 geöffnet sind. Das analoge Ausgangssignal 29 entspricht beispielsweise dem Sollwert einer zu steuernden oder zu regelnden Funktion:

Nach dem Rampengenerator 23 ist zweckmäßigerweise ein Begrenzer 30 vorgesehen. Er begrenzt den oberen bzw. den unteren oder sowohl den oberen als auch den unteren Betrag des Sollwertes auf zulässige Werte. Ist der Begrenzer 30 nicht vorgesehen, dann findet zwangsläufig eine Begrenzung des Sollwertes durch den Rampengenerator 23 statt, der im Begrenzungsfall eine Funktion von dessen Ausgangsbeschaltung und der verfügbaren Versorgungsspannung ist. Erreicht der Sollwert durch Verbinden beispielsweise des ersten Schaltkontaktes 11 mit Masse 13 einen Grenzwert, so hat eine darüber hinaus andauernde Verbindung keinen Einfluß mehr auf den Sollwert. Eine Änderung kann in diesem Fall nur durch Verbinden des zweiten Schaltkontaktes 12 mit Masse 13 erfolgen. Liegt das Ausgangssignal 29 des Rampengenerators 23 weit außerhalb der durch den Begrenzer vorgegebenen Werte, dann tritt die gegenläufige Änderung des Sollwertes nach dem Begrenzer 30 mit einer gewissen Verzögerung auf, die vom Betrag der Überschreitung des Grenzwertes am Ausgang 29 des Rampengenerators 23 abhängt.

Der Einstellhebel 10 wirkt nicht mehr auf den Rampengenerator 23, wenn das vom Fahrgeschwindigkeitsgeber 26 abgegebene Signal oberhalb der durch den zweiten Vergleicher 25 gegebene Schwelle der Fahrgeschwindigkeit liegt und somit die beiden Schalter der zweiten Schaltergruppe 17 geöffnet sind.

Gegebenenfalls kann es zweckmäßig sein, den zuletzt eingestellten Sollwert vor dem Abschalten des Fahrzeugs abzuspeichern, so daß er nach Wiedereinschaltung sofort zur Verfügung steht. Hierzu ist die speichernde Anordnung 31 vorgesehen, die beispielsweise als Sample und Hold-Schaltung ausgeführt ist.

Das am Ausgang 32 der speichernden Anordnung 31 anstehende Signal kann zu Steuerungszwecken verwendet werden, es kann jedoch auch als Führungsgröße eines Regelkreises, von dem hier der Summierer 34 mit den beiden Eingängen 33, 35, der Regelgrößengeber 36 und der eigentliche Regler 38 gezeigt sind, verwendet werden. Der Regler 38 erzeugt an seinem Ausgang 39 ein Regelsignal in Abhängigkeit von der am Ausgang 37 des Summierers 34 auftretenden Regelabweichung. Ist die in der Figur gezeigte Verbindung des Reglerausgangs 39 mit dem Fahrgeschwindigkeits-Regelgerät 20 vorhanden, dann kann mit der angegebenen Anordnung die Leerlaufdrehzahl einer Brennkraftmaschine eingestellt werden, wenn der Regelgrößengeber 36 die Motordrehzahl erfaßt.

Die beschriebene analoge Signalverarbeitung zwischen der zweiten Schaltergruppe 17 und dem Summierer 34 kann vorteilhaft durch digitale Signalverarbeitung ersetzt werden. Auch hier ist wesentlich, daß der Fahrgeschwindigkeits-Einstellhebel 10 oberhalb der durch den ersten Vergleicher 24 vorgegebenen erste Schwelle der Fahrgeschwindigkeit durch Schließen der in der ersten Schaltergruppe 16 enthaltenen beiden Schalter bestimmungsgemäß mit dem Fahrgeschwindigkeits-Regelgerät 20 zusammenarbeitet und unterhalb der durch den zweiten Vergleicher 25 vorgegebenen zweiten Schwelle der Fahrgeschwindigkeit zur Steuerung anderer Funktionen durch Schließen der in der zweiten Schaltergruppe 17 enthaltenen beiden Schalter herangezogen wird, wobei zwischen der ersten und der zweiten Schwelle der Fahrgeschwindigkeit ein Geschwindigkeitsbereich liegt, in welchem der Einstellhebel 10 durch Öffnen aller Schalter der ersten und zweiten Schaltergruppe 16, 17 funktionslos geschaltet ist.

Unterhalb der zweiten Fahrgeschwindigkeitsschwelle steuern die beiden Signalleitungen 21, 22 den Aufwärts-Abwärts-Zähler, der an die Stelle des Rampengenerators 23 tritt. Solange der Einstellhebel 10 beispielsweise den ersten Schaltkontakt 11 an Masse 13 legt, findet ein Aufwärts-Zählvorgang, und solange der zweite Schaltkontakt 12 an Masse 13 geschaltet ist, ein Abwärts-Zählvorgang statt. Der Zählerstand am Ausgang 29 des Zählers 23 entspricht einem Sollwert, der in dem nachfolgenden digitalen Begrenzer 30 auf einen oberen oder unteren bzw. sowohl auf einen oberen als auch einen unteren Wert begrenzt wird.

Auch hier ist eine speichernde Anordnung 31 vorgesehen für den Fall, daß der Sollwert nach Abschalten des Fahrzeuges gespeichert werden soll. Als Speicherelement des digital vorliegenden Sollwertes eignet sich hier besonders ein elektrisch löschbarer Festwertspeicher, der auch nach Abschalten der Versorgungsspannung seine Information behält.

Einen Übergang von der digitalen zur analogen Signalverarbeitung ermöglicht gegebenenfalls ein Digital-Analog-Wandler. Wie bereits beschrieben, kann dieses Signal zur Steuerung oder Regelung von Funktionen herangezogen werden.

Die Anordnung gestattet eine Leerlaufdrehzahlregelung einer Brennkraftmaschine, wenn die zwischen dem Reglerausgang 39 und dem Fahrgeschwindigkeits-Regelgerät 20 gezeigte Verbindung vorhanden ist und der Regelgrößengeber 36 die Motordrehzahl erfaßt.

Sind die digitalen Komponenenten Aufwärts-Abwärts-Zähler 23, digitaler Begrenzer 30 und speichernde Anordnung 31 als Mikroprozessor-Schaltung realisiert, so werden zweckmäßigerweise der Summierer 34 und der Regler 38 als Rechenprogramm realisiert. Die Beibehaltung der digitalen Signalverarbeitung ist insbesondere dann vorteilhaft, wenn die nachfolgenden Schaltungen, hier zum Beispiel das Fahrgeschwindigkeits-Regelgerät 20, ebenfalls eine digitale Signalverarbeitung vornimmt.

Neben dem in der Figur gezeigten Ausführungsbeispiel ist eine einfachere Ausführung der Anordnung dadurch möglich, daß die beiden Signalleitungen 21, 22 unterhalb der zweiten Fahrgeschwindigkeits-Schwelle unmittelbar Schaltvorgänge auslösen. Einstellvorgänge, die vorzugsweise im Stillstand des Fahrzeugs vorgenommen werden, sind beispielsweise die Rückspiegeleinstellung oder die Sitzverstellung. Anstelle des Rampengenerators bzw. Aufwärts-Abwärts-Zählers 23 ist dann eine Schaltstufe zur Ansteuerung von Elektromotoren vorgesehen.

Eine weitere Anwendung der erfindungsgemäßen Anordnung ist das Einstellen von Grenzwerten wie beispielsweise der Höchst-Drehzahl des Fahrmotors oder das Einstellen der maximalen Fahrgeschwindigkeit. In diesem Falle wirken die beiden Signalleitungen 21, 22 zusätzlich zu der entsprechenden Begrenzungsschaltung auch auf die elektronischen Anzeigeelemente für die Motordrehzahl bzw. der Fahrgeschwindigkeit, damit der einzustellende Wert unmittelbar abgelesen werden kann.

## Patentansprüche

1. Fahrgeschwindigkeits-Einstellvorrichtung einer Fahrgeschwindigkeits-Regelanlage in Fahrzeugen, der eine Neutralstellung und wenigstens zwei Schaltkontakte beispielsweise zur Steuerung des Anhebe- bzw. des Absenkvorgangs des Fahrgeschwindigkeits-Sollwertes aufweist, dadurch gekennzeichnet, daß wenigstens ein Schaltkontakt (11, 12) der Fahrgeschwindigkeits-Einstellvorrichtung (10) unterhalb eines durch einen ersten Vergleicher (24) vorgebbaren ersten Schwellwertes der Fahrgeschwindigkeit, beispielsweise 40 km/h, als Bedienelement für andere Funktionen dient.

2. Fahrgeschwindigkeits-Einstellvorrichtung nach Anspruch 1, dadurch gekennzeichnet, daß durch Vergleicher (24, 25) ansteuerbare Schaltmittel (16, 17) Schaltkontakte (11, 12) der Fahrgeschwindigkeits-Einstellvorrichtung (10) über Signalleitungen (14, 15, 18, 19, 21, 22) mit Schaltungsanordnungen (20, 23) verbinden.

3. Fahrgeschwindigkeits-Einstellvorrichtung nach Anspruch 1 oder 2, dadurch gekennzeichnet, daß unterhalb der ersten Fahrgeschwindigkeits-Schwelle Signalleitungen (14, 15, 18, 19) zwischen den Schaltkontakten (11, 12) der Einstellvorrichtung (10) und eines Fahrgeschwindigkeits-Regelgerätes (20) durch eine erste Schaltergruppe (16) aufgetrennt und oberhalb der ersten Schwelle verbunden sind.

4. Fahrgeschwindigkeits-Einstellvorrichtung nach einem der Ansprüche 1 bis 3, dadurch gekennzeichnet, daß unterhalb eines durch einen zweiten Vergleicher (25) vorgebbaren zweiten Schwellwertes der Fahrgeschwindigkeit, beispielsweise 20 km/h, Signalleitungen (14, 15, 21, 22) zwischen den Schaltkontakten (11, 12) der Fahrgeschwindigkeits-Einstellvorrichtung (10) und einer Schaltungsanordnung (23) der anderen Funktion durch eine zweite Schaltergruppe (17) verbunden und oberhalb der zweiten Fahrgeschwindigkeits-Schwelle aufgetrennt sind.

5. Fahrgeschwindigkeits-Einstellvorrichtung nach einem der Ansprüche 1 bis 4, dadurch gekennzeichnet, daß die erste Fahrgeschwindigkeits-Schwelle größer als die zweite Fahrgeschwindigkeits-Schwelle ist, und daß die Fahrgeschwindigkeits-Einstellvorrichtung (10) bei Fahrgeschwindigkeiten zwischen der ersten und zweiten Schwelle durch Auftrennen aller Signalleitungen (14, 15, 18, 19, 21, 22) mittels der ersten und zweiten Schaltergruppe (16, 17) funktionslos geschaltet ist.

6. Fahrgeschwindigkeits-Einstellvorrichtung nach einem der Ansprüche 1 bis 5, dadurch gekennzeichnet, daß die Fahrgeschwindigkeits-Einstellvorrichtung (10) unterhalb der ersten Fahrgeschwindigkeits-Schwelle in Zusammenwirkung mit der Schaltungsanordnung (23) zur Steuerung der Änderung eines Sollwertes dient.

7. Fahrgeschwindigkeits-Einstellvorrichtung nach Anspruch 6, dadurch gekennzeichnet, daß die Fahrgeschwindigkeits-Einstellvorrichtung (10) zur Steuerung des Anhebe- bzw. des Absenkvorganges des Leerlaufdrehzahl-Sollwertes einer Brennkraftmaschine dient.

8. Fahgeschwindigkeits-Einstellvorrichtung nach Anspruch 6, dadurch gekennzeichnet, daß die Fahrgeschwindigkeits-Einstellvorrichtung (10) zur Steuerung des Sollwertes der Drehzahlbegrenzung des Fahrmotors und/oder der Höchstgeschwindigkeit des Fahrzeugs dient.

9. Fahrgeschwindigkeits-Einstellvorrichtung nach einem der Ansprüche 1 bis 6, dadurch gekennzeichnet, daß die Schaltkontakte (11, 12) der Fahrgeschwindigkeits-Einstellvorrichtung (10) unterhalb der zweiten Fahrgeschwindigkeits-Schwelle über die mit der zweiten Schaltergruppe (17) miteinander verbundenen Signalleitungen (14 und 21, 15 und 22) zum Auslösen von Schaltfunktionen dienen.

10. Fahrgeschwindigkeits-Einstellvorrichtung nach Anspruch 6, dadurch gekennzeichnet, daß die Signalleitungen (21, 22) Steuerleitungen zum Auslösen eines ansteigenden bzw. abfallenden Ausgangssignals (29) eines Signalgenerators (23), insbesondere eines Rampengenerators, sind.

11. Fahrgeschwindigkeits-Einstellvorrichtung nach Anspruch 10, dadurch gekennzeichnet, daß nach dem Signalgenerator (23) ein Begrenzer (30) geschaltet ist, der das Ausgangssignal (29) des Signalgenerators (23) auf einen ersten Wert bzw. auf einen ersten und zweiten Wert begrenzt.

12. Fahrgeschwindigkeits-Einstellvorrichtung nach Anspruch 6, dadurch gekennzeichnet, daß die Signalleitungen (21, 22) Steuerleitungen einer Zählvorrichtung (23), insbesondere eines Aufwärts-Abwärts-Zählers, sind.

13. Fahrgeschwindigkeits-Einstellvorrichtung nach Anspruch 12, dadurch gekennzeichnet, daß nach der Zählvorrichtung (23) ein digitaler Begrenzer (30) geschaltet ist, der den Zählerstand der Zählvorrichtung (23) auf einen ersten digitalen Wert bzw. und auf einen ersten und zweiten digitalen Wert begrenzt.

14. Fahrgeschwindigkeits-Einstellvorrichtung nach einem der Ansprüche 10 bis 13, dadurch gekennzeichnet, daß das Ausgangssignal (29) des Signalgenerators (23) bzw. der Zählerstand der Zählvorrichtung in einer speichernden Anordnung (31) nach dem Abschalten des Fahrzeugs eingespeichert ist.

**Revendications**

1. Dispositif de réglage de la vitesse de roulage d'une installation de réglage de la vitesse de roulage dans des véhicules, présentant une position neutre et au moins deux contacts de connexion, par exemple en vue de la commande du processus d'augmentation et de diminution de la valeur de consigne de vitesse de roulage, caractérisé en ce qu'au moins un contact de commande (11, 12) du dispositif de réglage de la vitesse de roulage (10) sert d'élément de manoeuvre pour les autres fonctions, au-dessous d'une première vitesse de seuil de la vitesse de roulage, prédéterminable au moyen d'un premier comparateur (24), par exemple 40 km/h.

2. Dispositif de réglage de la vitesse de roulage selon la revendication 1, caractérisé en ce que des moyens de connexion (16, 17) susceptibles d'être commandés relient, aux moyens de comparateurs (24, 25), des contacts de commande (11, 12) du dispositif de réglage de la vitesse de roulage (10) à des circuits (20, 23), par l'intermédiaire de lignes de signalisation (14, 15, 18, 19, 21, 22).

3. Dispositif de réglage de la vitesse de roulage selon la revendication 1 ou 2, caractérisé en ce qu'en-dessous du premier seuil de vitesse de roulage, des lignes de signalisation (14, 15, 18, 19) situés entre les contacts de commande (11, 12) du dispositif de réglage (10) et un appareil de réglage de vitesse de roulage (20) sont isolées au moyen d'un premier groupe d'interrupteurs (16) et qu'elles sont reliées, au-dessus du premier seuil.

4. Dispositif de réglage de la vitesse de roulage selon l'une des revendications 1 à 3, caractérisé en ce qu'en-dessous d'une deuxième valeur de seuil de vitesse de roulage qui est prédéterminable au moyen d'un deuxième comparateur (25), par exemple 20 km/h, des lignes de signalisation (14, 15, 21, 22) situées entre les contacts de commande (11, 12) du dispositif de réglage de la vitesse de roulage (10) et un circuit de connexion (23) de l'autre fonction, sont reliées au moyen d'un deuxième groupe de commutateur (17) et qu'elles sont isolées, au-dessus du deuxième seuil de vitesse de roulage.

5. Dispositif de réglage de la vitesse de roulage selon l'une des revendications 1 à 4, caractérisé en ce que le premier seuil de vitesse de roulage est plus élevé que le deuxième seuil de vitesse de roulage et en ce que le dispositif de réglage de vitesse de roulage (10) est connecté, sans fonctionner, entre le premier et le deuxième seuil, par isolation de toutes les lignes de signalisation (14, 15, 18, 19, 21, 22) au moyen du premier et du deuxième groupe de commutateurs (16, 17).

6. Dispositif de réglage de la vitesse de roulage selon l'une des revendications 1 à 5, caractérisé en ce que le dispositif de réglage de la vitesse de roulage (10) sert à la commande de la modification d'une valeur de consigne en-dessous du premier seuil de vitesse de roulage, en coopération avec le circuit de connexion (23).

7. Dispositif de réglage de la vitesse de roulage selon la revendication 6, caractérisé en ce que le dispositif de réglage de la vitesse de roulage (10) sert à la commande du processus d'augmentation ou de diminution de la vitesse de rotation de ralenti du moteur à combustion interne.

8. Dispositif de réglage de la vitesse de roulage selon la revendication 6, caractérisé en ce que le dispositif de réglage de la vitesse de roulage (10) sert à la commande de la valeur de consigne de la limitation de la vitesse de rotation du moteur de propulsion et/ou de la vitesse maximale du véhicule.

9. Dispositif de réglage de la vitesse de roulage selon l'une des revendications 1 à 6, caractérisé en ce que les contacts de commande (11, 12) du dispositif de réglage de la vitesse de roulage (10) servent à déclencher des fonctions de connexion au-dessous du deuxième seuil de vitesse de roulage, par l'interrmédiaire des lignes de signalisation (14 et 21, 15 et 22) reliées par le deuxième groupe de commutateurs (17).

10. Dispositif de réglage de la vitesse de roulage selon la revendication 6, caractérisé en ce que les lignes de signalisation (21, 22) sont des lignes de commande pour déclencher un signal de sortie (29) croissant ou décroissant d'un générateur de signal (23), en particulier d'un générateur de rampe.

11. Dispositif de réglage de la vitesse de roulage selon la revendication 10, caractérisé en ce qu'en aval du générateur de signal (23) est branché un limiteur (30) qui limite le signal de sortie (29) du générateur de signal (23) à une première valeur ou à une première et à une deuxième valeur.

12. Dispositif de réglage de la vitesse de roulage selon la revendication 6, caractérisé en ce que les lignes de signalisation (21, 22) sont des lignes de commande d'un dispositif de comptage (23), en particulier d'un compteur progressif et dégressif.

13. Dispositif de réglage de la vitesse de roulage selon la revendication 12, caractérisé en ce qu'en aval du dispositif de comptage (23) est branché un limiteur numérique (30) qui limite l'état du compteur du dispositif de comptage (23) à une première valeur numérique ou à une première et à une deuxième valeur numérique.

14. Dispositif de réglage de la vitesse de roulage selon l'une des revendications 10 à 13, caractérisé en ce que le signal de sortie (29) du générateur de signal (23) ou l'état de compteur du dispositif de comptage sont mis en mémoire dans un dispositif de mémoire (31) après la mise hors service du véhicule.

**Claims**

1. Travelling-speed adjusting device of a travelling-speed control system in vehicles, which has a neutral position and at least two switch contacts, for example for controlling the respective operations of increasing and reducing the desired travelling-speed value, characterized in that, below a first threshold value for travelling speed, for example 40 km/h, predeterminable by means of a first comparator (24), at least one switch contact (11, 12) of the travelling-speed adjusting device (10) serves as an operating element for other functions.

2. Travelling-speed adjusting device according to Claim 1, characterized in that switching means (16, 17) controllable by comparators (24, 25) connect switch contacts (11, 12) of the travelling-speed adjusting device (10) to circuit arrangements (20, 23) via signal lines (14, 15, 18, 19, 21, 22).

3. Travelling-speed adjusting device according to Claim 1 or 2, characterized in that signal lines (14, 15, 18, 19) between the switch contacts (11, 12) of the adjusting device (10) and a travelling-speed control unit (20) are opened below the first travelling-speed threshold and are connected above the first threshold by a first switch group (16).

4. Travelling-speed adjusting device according to one of Claims 1 to 3, characterized in that signal lines (14, 15, 21, 22) between the switch contacts (11, 12) of the travelling-speed adjusting device (10) and a circuit arrangement (23) of the other function are connected below a second threshold value of the travelling speed, for example 20 km/h, predeterminable by means of a second comparator (25) and are opened above the second travelling-speed threshold by a second switch group (17).

5. Travelling-speed adjusting device according to one of Claims 1 to 4, characterized in that the first travelling-speed threshold is higher than the second travelling-speed threshold, and in that, at travelling speeds between the first and second thresholds, the travelling-speed adjusting device (10) is rendered inoperative by the opening of all the signal lines (14, 15, 18, 19, 21, 22) by means of the first and second switch groups (16, 17).

6. Travelling-speed adjusting device according to one of Claims 1 to 5, characterized in that, below the first travelling-speed threshold, the travelling-speed adjusting device (10), in interaction with the circuit arrangement (23), serves for controlling the change of a desired value.

7. Travelling-speed adjusting device according to Claim 6, characterized in that the travelling-speed adjusting device (10) serves for controlling the respective operations of increasing and reducing the desired idling-speed value of an internal-combustion engine.

8. Travelling-speed adjusting device according to Claim 6, characterized in that the travelling-speed adjusting device (10) serves for controlling the desired value of the speed limitation of the engine and/or of the maximum speed of the vehicle.

9. Travelling-speed adjusting device according to one of Claims 1 to 6, characterized in that, below the second travelling-speed threshold, the switch contacts (11, 12) of the travelling-speed adjusting device (10) serve for the tripping of switch functions via the signal lines (14 and 21, 15 and 22) connected to one another by means of the second switch group (17).

10. Travelling-speed adjusting device according to Claim 6, characterized in that the signal lines (21, 22) are control lines for triggering a rising or falling output signal (29) from a signal generator (23), especially a ramp generator.

11. Travelling-speed adjusting device according to Claim 10, characterized in that connected after the signal generator (23) is a limiter (30) which limits the output signal (29) of the signal generator (23) to a first value and to a first and second value respectively.

12. Travelling-speed adjusting device according to Claim 6, characterized in that the signal lines (21, 22) are control lines of a counting device (23), especially a count-up/count-down counter.

13. Travelling-speed adjusting device according to Claim 12, characterized in that connected after the counting device (23) is a digital limiter (30) which limits the count of the counting device (23) to a first digital value and to a first and second digital value respectively.

14. Travelling-speed adjusting device according to one of Claims 10 to 13, characterized in that the output signal (29) of the signal generator (23) or the count of the counting device is stored in a storage arrangement (31) after the vehicle has been switched off.

1